# EUROPEAN PATENT SPECIFICATION

(11) **EP 2 491 839 B1**
(45) Date of publication and mention of the grant of the patent: **24.08.2016**
(21) Application number: 11425048.3
(22) Date of filing: 28.02.2011
(51) Int. Cl.: A47K 13/12, F16F 9/14

(54) **Damper hinge for toilet bowl and assembly comprising such hinge**
Ein Dämpfungsscharnier für ein Toilettenbecken und eine Anordnung mit einem solchen Scharnier
Charnière à amortissement pour une cuvette de toilettes et un ensemble avec une telle charnière

(43) Date of publication of application: 29.08.2012
(73) Proprietor: Saniplast S.p.A., 25035 Ospitaletto (BS) (IT)
(72) Inventor: Corioni, Filippo, 25020 San Paolo, Brescia (IT)
(74) Representative: Pulieri, Gianluca Antonio

(56) References cited:
- US-A- 5 419 013
- US-A1- 2006 011 427
- US-B1- 6 393 624

## Description

The present invention relates to a damper hinge for joining a toilet ring/lid to a toilet bowl, and an assembly comprising such damper hinge.

In the bathroom fittings sector the use of damper hinges for joining toilet rings or lids to toilet bowls is known of. For instance, document US 2006/0011427 discloses a damper hinge, comprising the features of the preamble of claim 1.

Such hinges comprise a hinge body, joined to the toilet bowl and identifying at least one compartment containing a dampening liquid, and a pin connected to the toilet ring and housed in the compartment so as to rotate in relation to the hinge body.

The pin is further provided with fins immersed in the liquid so as to slow down the rotation speed of the pin. This way, it is possible, for example, to prevent the toilet ring or lid from striking against the free rim of the toilet bowl with excessive impetus when brought into a horizontal position, with the risk of damaging the toilet ring or the toilet bowl ceramic.

Traditional damper hinges however have the drawback that the described dampening system acts constantly on the pin, irrespective of its angular position in relation to the hinge body and regardless of whether the toilet ring/lid is being moved towards a horizontal or vertical position.

Consequently, while on the one hand it is desirable to avoid impact of the lid on the free rim of the toilet bowl, on the other its relative raising is slowed down by the presence of the traditional type dampers.

Moreover, since the weight force acting on the toilet ring/lid is smaller at the initial lowering phases, but increases progressively upon greater inclination of the toilet ring/lid, traditional hinges are extremely slow in the aforesaid initial phases.

The present invention therefore sets out to overcome the drawbacks of the prior art and, in particular, those mentioned above.

Such objective is achieved by a hinge according to claim 1 and by an assembly according to claim 10. The dependent claims show preferred embodiments.

The object of the present invention will now be described in detail with the help of the attached figures, wherein:

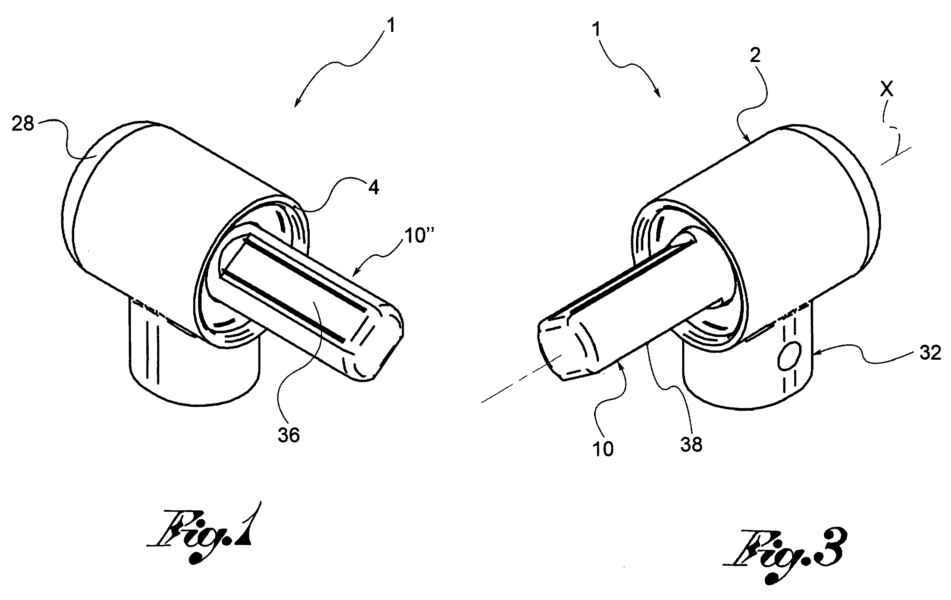

- figures 1 and 3 show opposite perspective views of a hinge which the present invention relates to, in a possible embodiment;
- figures 2 and 4 show views with separated parts of the hinge of figures 1 and 3 respectively;
- figures 5 and 8 show a lateral view and a perspective view of the articulation pin;
- figures 6 and 7 show two cross-sections along the planes VI-VI and VII-VII drawn in figure 5;
- figures 9a, 9b, 10a, 10b and 11a, 11b show pairs of transversal sections of the hinges taken respectively at the distal and proximal access apertures, in which the articulation pin is positioned in three different angular positions and where the line marked with 34 shows the orientation of the toilet ring/lid in relation to the toilet bowl.

With reference to the aforesaid drawings, reference numeral 1 globally denotes a damper hinge for joining a toilet ring/lid to a toilet bowl.

Consequently the present hinge is suitable for connecting in a swivelling manner a toilet ring, a lid or both to a toilet bowl.

Within this patent text, the term "toilet ring" is taken to mean the annular portion of the seat employed to use the toilet bowl in a seated position; the term "lid" is understood rather to mean the element of the seat which may lie on top of the toilet ring, suitable for at least partially closing the toilet bowl.

The hinge 1 comprises a hinge body 2, suitable for being connected to the toilet bowl or to the toilet ring, which comprises a body wall 4.

In the embodiment shown the hinge body is shaped so as to enable connection to the toilet bowl.

In fact, according to such variation, the hinge body comprises an attachment portion 32 to the toilet bowl, e.g. inside or outside threaded.

The body wall 4 identifies at least one compartment 6, 8 containing a dampening liquid, for example water or an industrial oil.

Preferably, the compartment is tubular, i.e. the wall extends around an axis X.

Such wall 4 further comprises a pair of first radial fins 10, 12, which are connected to the body wall 4 and which extend towards the compartment 6, 8.

In other words, the first fins project radially inwardly from the surface 56 of the body wall facing the compartment.

Advantageously, the first fins are reciprocally diametrically facing, and are preferably one-pieced with the body wall.

The hinge 1 further comprises an articulation pin 10, associable with the toilet ring or with the toilet bowl, at least partially housed in the compartment 6, 8 so as to rotate around a rotation axis X.

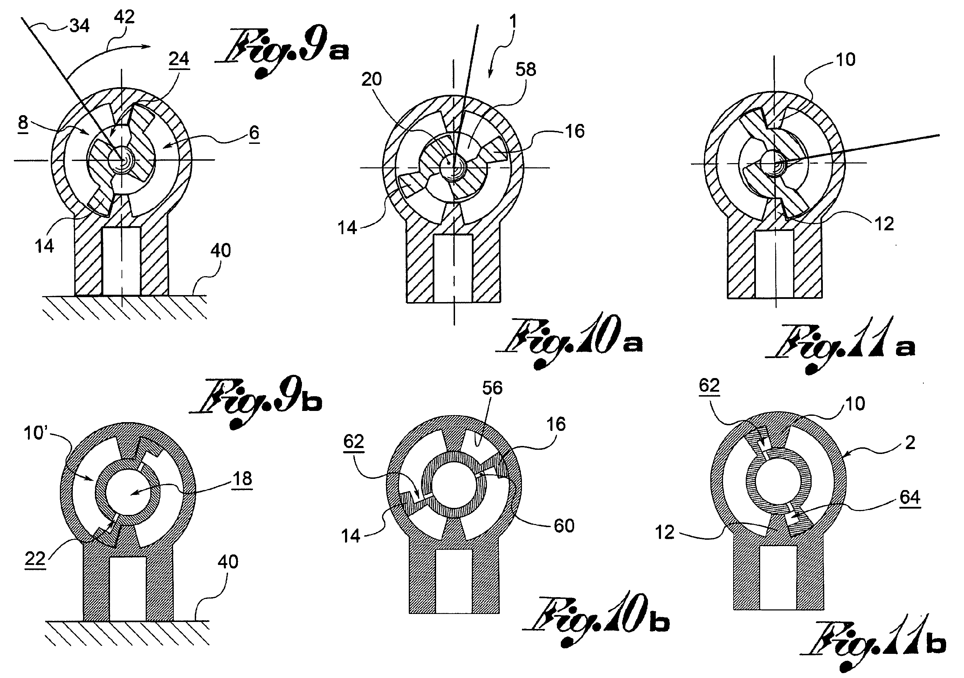

In the embodiment shown, the articulation pin is suitable for being coupled to the toilet ring or to the lid. For example, the free end 10" of such pin, which projects outwardly from the compartment, is shaped so as to form a shaped coupling with the not illustrated toilet ring/lid, but merely outlined by the line 34 in figures 9a to 11b.

Preferably, the pin extends longitudinally between a proximal extremity portion 10', engaged in the compartment and at least partially immersed in the dampening liquid, and the free end 10".

Within this description, the term "proximal" shall indicate the components positioned at an end wall 28 of the hinge body 2; conversely, the term "distal" shall refer to the parts of the present hinge positioned towards the free end 10" of the pin.

Advantageously, the longitudinal extension of the pin is parallel and coincident with the rotation axis X.

According to a further variation, the pin is assembled coaxially to the tubular body wall 4.

In order for the dampening liquid to remain confined in the compartment, one embodiment variation provides for a distal closure of the hinge body by a closure element 44, preferably detachable from the body, optionally by means of the interposition of at least one sealing element 46, 48.

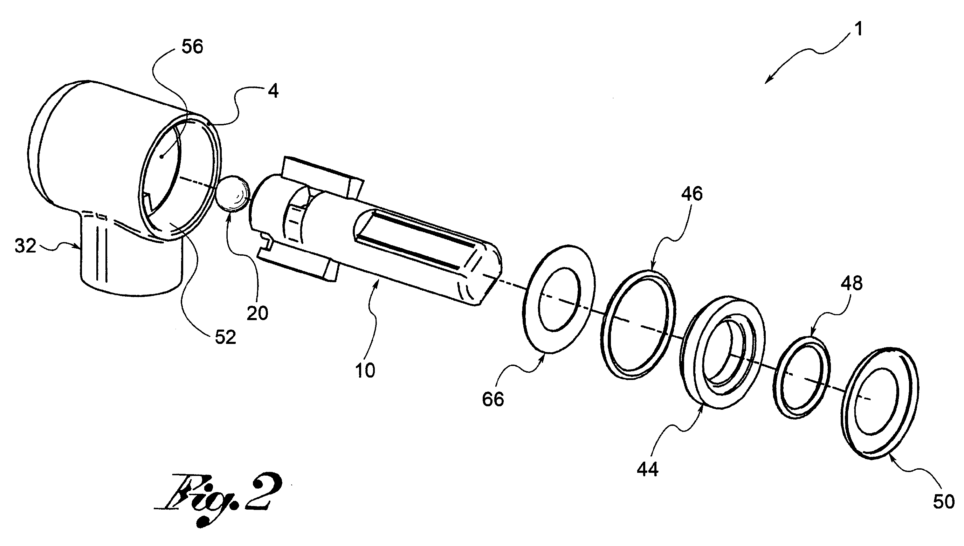

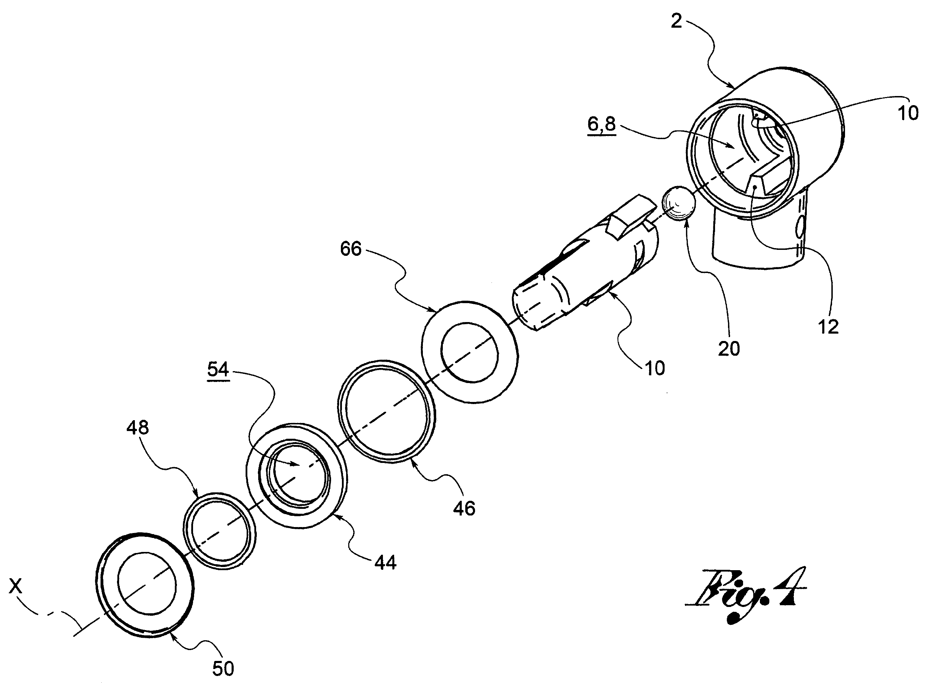

Advantageously, figures 2 and 4 use a pair of sealing elements 46, 48, for example of different diameters, one positioned inside and the other positioned outside, separated by the closure element 44.

According to one variation (not shown), the closure element 44 is suitable for being screwed onto an inner or outer threading performed on the hinge body.

Preferably, the closure element 44 is fixed to the hinge body 2 by means of an axial retention device 50, which axially compresses such element and the sealing devices (where foreseen) along the rotation axis X.

In the variation shown, the axial retention device 50 comprises a ring in elastic material, e.g. metallic, suitable for snap-coupling to a complementary portion 52 performed on the hinge body 2.

According to an advantageous embodiment, the closure element 44 identifies a through hole 54 engaged by the articulation pin in a rotatable manner.

The articulation pin 10 comprises at least one second radial fin 14, 16, preferably a pair of such fins, at least partially immersed in the dampening liquid, so as to reduce the rotation speed of the pin 10.

In fact, when the pin is activated in rotation, the second fin moves in the dampening liquid which, having a greater density than air, opposes resistance to the rotation of the pin.

Preferably, the second radial fin 14, 16 is one-pieced with the pin.

According to a preferred variation, for the embodiments envisaging at least one sealing element 46 facing the articulation pin 10, the hinge comprises a protective component 66, preferably a washer, positioned between the second fin 14, 16 and the aforesaid element 46 to prevent damage of the latter during rotation of the pin.

According to one advantageous variation, the articulation pin 10 comprises a pair of second radial fins 14, 16 positioned diametrically in relation to the longitudinal extension of the pin 10.

The approach of the second fin 14, 16 towards the first fins 10, 12 causes a shift of the dampening liquid and in particular a movement of such liquid through a fluidic passage 18 communicating with the compartment 6, 8.

Consequently, when the second fin approaches one of the first fins, they generate between them a pressure on the dampening liquid which is thereby pushed into the fluidic passage 18.

According to a particularly advantageous variation, the fluidic passage 18 extends at least partially in the articulation pin 10.

According to a further variation (not shown), the fluidic passage extends in a circumferential chamber made in the body wall 4, or radially outside it.

The damper hinge 1 further comprises at least one intercepting assembly 20 of the dampening liquid operatively connected to the fluidic passage 18; the assembly 20 is such as to enable the transit of the liquid in the passage when the articulation pin 10 is moved in a first angular direction, and is such as to reduce the cross-section of transit of the passage 18 when the articulation pin 10 is moved in a second angular direction opposite the first.

In other words, when the pin 10 is moved in a direction separating the toilet ring/lid from the toilet bowl 40, the intercepting assembly does not act on the fluidic passage so that the liquid can flow freely inside it.

Conversely, when the pin is moved in a direction lowering the toilet ring/lid (e.g. in the direction of arrow 42 in figure 9a), the intercepting assembly at least partially obstructs the passage 18 so as to slow down the exit of the liquid from the area where the aforesaid pressure was generated.

As a result, the intercepting assembly acts in a selective manner on the toilet ring/lid depending on the movement direction thereof.

Preferably, the intercepting assembly 20 comprises a modified check valve so that when the articulation pin 10 is moved in the second direction, such valve (for example its shutter) is shaped to allow a seeping of dampening liquid into the fluidic passage 18.

In other words, the check valve used in the present hinge does not close the fluidic passage tightly, otherwise the lowering of the toilet ring would be prevented; on the contrary, a partial flow of the dampening liquid transits in the passage to reduce the pressure generated between the first and second radial fin.

According to the invention, the articulation pin 10 defines a proximal access aperture 22 and a distal access aperture 24 of the fluidic passage 18, distanced so that the dampening liquid flow strikes the intercepting assembly 20.

According to the variation shown, the articulation pin 10 defines a pair of proximal 22 and distal 24 access apertures, positioned diametrically to each other.

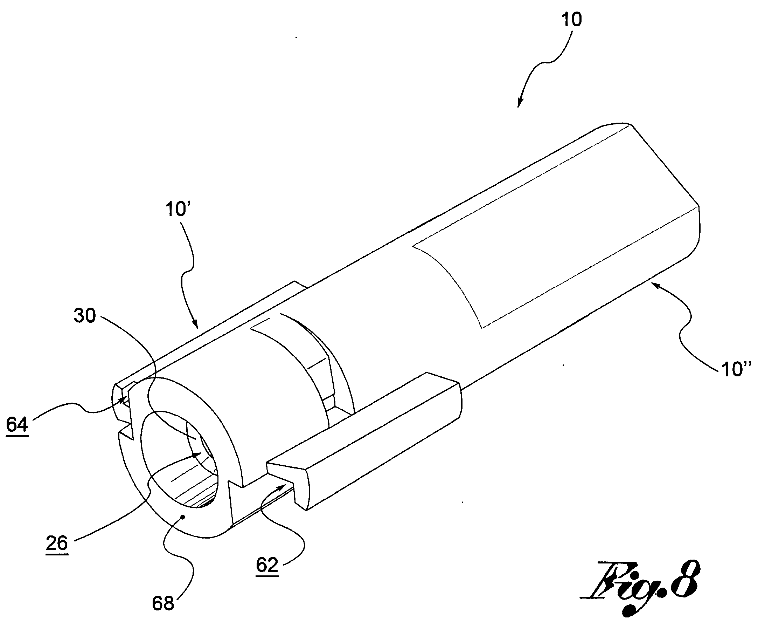

According to a further variation (for example shown in figure 8), the proximal access aperture comprises a space included between the surface of the end wall 28 of the hinge body 2 and the surface 68 of the articulation pin destined to abut against the end wall 28.

In fact, according to such variation, the articulation pin does not comprise slits in its wall destined to put the fluidic passage in communication with the compartment 6, 8 but the aforesaid space is sufficient to guarantee transit of the dampening liquid.

According to a further variation, the fluidic passage 18 comprises access apertures 22, 24 which radially terminate into the compartment 6, 8.

In other words, the fluidic passage comprises a first 58 and a second 60 radial duct which end in the access apertures 22, 24.

According to one advantageous embodiment, the proximal access aperture 22 ends in a recess 62, 64 of the second radial fin 14, 16; preferably, the pair of second radial fins each define their own recess.

The proximal 22 and distal 24 access apertures are circumferentially and axially staggered in relation to the longitudinal extension of the pin 10.

Preferably, the intercepting assembly 20 comprises a sphere, which moves in a seat 26 made between the end wall 28 of the hinge body 2 and the proximal extremity portion 10' of the articulation pin 10.

Consequently, according to this variation, the sphere is restrained on one side by the end wall and on the opposite side by the articulation pin which is preferably shaped proximally so as to completely house the sphere in at least one of its functioning configurations, preferably in the configuration of occlusion of the fluidic passage.

According to a preferred embodiment, the sphere acts on an intake 30 of the fluidic passage 18 tapered towards the free end 10" of the articulation pin 10.

In other words, the proximal intake 30 is flared towards the inside of the fluidic passage, so as to form a generally truncated cone abutment surface for the sphere.

According to a preferred embodiment, the seeping of the dampening liquid mentioned previously is obtained by selecting different curvature angles between the outer surface of the sphere and the intake 30 of the fluidic passage.

Consequently, since the proximal access aperture 22 terminates in the abutment seat of the sphere, despite the latter finding itself in the occlusion configuration of the passage, the dampening liquid in any case finds an access route to the fluidic passage 18 which corresponds to this area of superimposition.

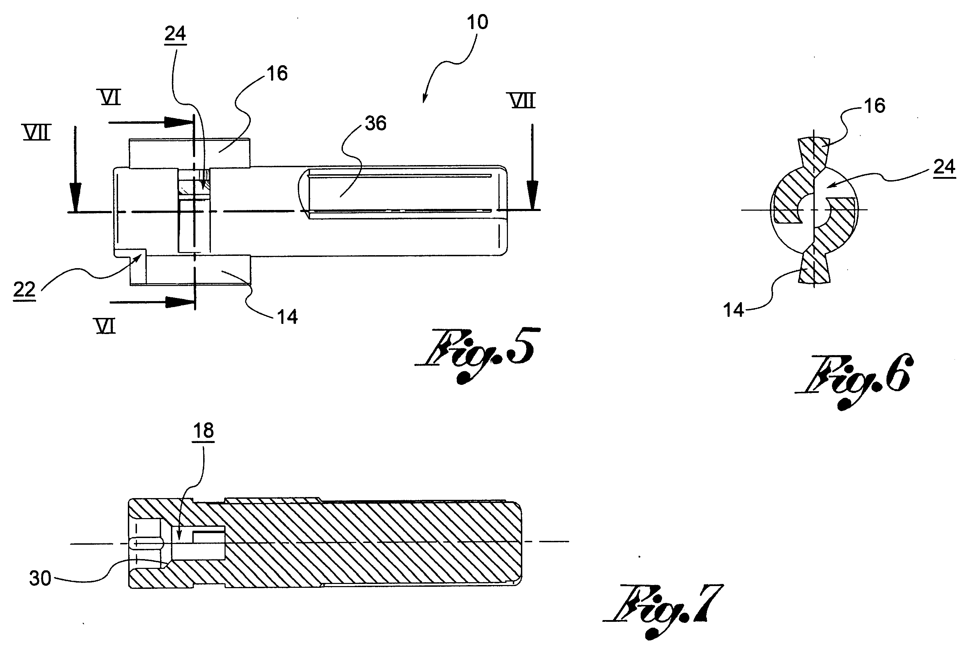

In the variation shown in figure 5, the distal access aperture 24 comprises a circumferential slot which extends in the shape of a circular sector and converges towards the fluidic passage 18 restricting its through section.

The presence of a distal access in the form of a slot advantageously makes it possible to regulate various speeds of descent of the toilet ring/lid, depending on the angular position of the pin and of its second fin.

For one of the variations described, the narrowing section of the transit section corresponds to the first radial duct 58.

According to a preferred embodiment, the pair of first radial fins 10, 12 and the pin 10 divide the compartment 6, 8 into a first 6 and a second semi-compartment 8, which are preferably symmetrical to each other.

Consequently, according to one of the variations discussed, each second radial fin is positioned in a separate semi-compartment, so that their action is balanced.

The present invention also relates to an assembly comprising a toilet ring, a lid and/or a toilet bowl and a hinge 1 according to any of the previous claims connected to said toilet ring, lid and/or toilet bowl.

Preferably, such assembly comprises a first and a second hinge opposite the first.

According to a preferred embodiment, the first hinge comprises a first articulation pin firmly joined to the toilet ring and in a rotatable manner to the lid, and the second hinge comprises a second articulation pin firmly joined to the lid and in a rotatable manner to the toilet ring.

Consequently the first hinge, despite also being connected to the lid, is destined to damp solely the toilet ring, while the second hinge does not damp the toilet ring but only the lid.

Such technical effect may for example be achieved by shaping the articulation pin with a first sliding portion to enable rotation of the toilet ring/lid, and a coupling portion, axially adjacent to the sliding portion, suitable for coupling firmly with the lid/toilet ring to damp it.

The functioning of the hinge according to the embodiments illustrated will now be described by way of a non-limiting example.

With reference to figures 9a and 9b, the toilet ring/lid 34 is initially positioned in a raised configuration, so as to allow access to the toilet bowl 40.

In such configuration, the second radial fin 14 of the articulation pin 10 is positioned in the second semi-compartment 8 in a position adjacent to the corresponding first radial fin 12 of the hinge body, and the sphere 20 which forms the intercepting assembly is distant from the intake 30 of the fluidic passage to allow the transit of the dampening liquid inside such passage.

When the toilet ring/lid 34 is moved in the direction of the arrow 42, the pin 10 correspondingly moves so that the second radial fin 14, 16 rotates inside the dampening liquid displacing a portion thereof: initially, the shifted liquid enters the distal access aperture 24 of the fluidic passage 18 thanks to the gradual circumferential approach of the second radial fin 14 to the first radial fin 10, so that the liquid can transit in the fluidic passage 18 through the first radial duct 58. The seeping of such liquid from the passage 18 also occurs in the first semi-compartment 6 through the second radial duct 60 which ends in the proximal access aperture 22.

During this shift, the direction of flow is orientated in the direction distal access aperture 24 - proximal access aperture 22, so that the dampening liquid axially presses on the sphere 20 to distance it from the intake 30.

Consequently, in this condition, the fluidic passage is not obstructed by the sphere in that the latter is kept in an opening configuration of the fluidic passage by the force and by the direction of the flow.

When the circumferential distance between the second radial fin 14 and the first radial fin 10 decreases (figures 10a, 10b), the shifted liquid can no longer enter the distal access aperture 24 of the fluidic passage 18, since the latter is positioned in the first semi-compartment 6 beyond the first radial fin 10, which ensures a certain seal between the two semi-compartments, preventing the circumferential transit of the liquid.

In such situation, upon increase of the pressure between the two fins 14, 10, the dampening liquid follows an alternative route through the proximal access aperture 22, which faces the area in which the pressure is being generated.

Consequently, the dampening shifted liquid enters the proximal access aperture 22 of the fluidic passage 18 so that the liquid can transit in the fluidic passage 18 through the second radial duct 60.

It should be noted that in the variations illustrated, the fluidic passage 18 comprises a pair of distal 24 and proximal 22 access apertures; consequently, the liquid entering the fluidic passage 18 in this functioning configuration will be channelled into the same second semi-compartment 8 on account of the diametrically opposite pressure generated between the fins 12, 16 in the first semi-compartment 6 through the other proximal access aperture 22.

In other words, the areas included between the radial fins 14, 10 and between the fins 12, 16 will constitute pressure areas by virtue of the movement of the pin and its fins, while the areas between the fins 12, 14 and between the fins 10, 16 will be the discharge areas of the accumulated pressure.

During this shift, the direction of flow is orientated in the direction proximal access aperture 22 - distal access aperture 24, so that the dampening liquid presses on the sphere 20 to bring it, in abutment with the intake 30, into the occlusion configuration.

Consequently, the fluidic passage 18 will prove at least partially obstructed so that the fins 14, 16 of the articulation pin 10 meet with greater resistance to shifting, and the speed of the toilet ring/lid 40 is reduced.

Consequently, during the transition from the configuration shown in figures 10a, 10b to the configuration in figures 11a, 11b the hinge markedly slows down the descent speed of the lid towards its lowered configuration.

Considering now the reverse movement of the lid, i.e. the conversion from the lowered to the raised configuration (that is to say a transition in the order figure 11 → figure 10 → figure 9), one may note how the flow direction is always and in any case in the direction distal access aperture 22 - proximal access aperture 24, since the dampening liquid constantly presses on the sphere 20 to distance it from the intake 30.

Consequently, when raising the toilet ring/lid, the intercepting assembly is disactivated and the hinge makes no resistance to opening of the toilet bowl.

Innovatively, the damper hinge according to the present invention acts on the pin in a differentiated manner depending on the angular position of the toilet ring/lid and depending on the movement direction of the latter.

Advantageously, the intercepting assembly which the present invention relates to is suitable for being adapted to specific requirements, for example to adjust the speed of descent of the toilet ring.

Advantageously, the hinge which the present invention relates to is easy to construct; consequently, as well as having extremely limited production costs, it proves even more reliable for an extremely high number of utilisation cycles.

In fact, the possibility of assembling all the hinge components from the same assembly direction enables automation of its assembly process.

Furthermore, the high number of cycles is also to be attributed to the fact that the dampening liquid acts only once in the lowering-raising cycle of the toilet ring/lid.

In other words, the friction forces act on the liquid only once for each of the aforesaid cycles.

A person skilled in the art may make variations or replacements of elements with other functionally equivalent to the aforesaid embodiments of the hinge and assembly so as to satisfy specific requirements.

For example, one embodiment may envisage that the articulation pin is connected to the toilet bowl, while the hinge body is firmly joined to the toilet ring/lid.

Also, in the variations shown, the pin has a pair of opposite parallel surfaces 36, 38 for coupling with the toilet ring. However further variations envisage different types of coupling suitable for avoiding rotation of the pin in relation to the toilet ring.

## Claims

1. Damper hinge (1) to hinge a toilet ring/lid to a toilet bowl, comprising:
- a hinge body (2), suitable for being connected to the toilet bowl (40) or to the ring, comprising a body wall (4) which identifies at least one compartment (6, 8) containing a dampening liquid, and a pair of first radial fins (10, 12), which are connected to the body wall (4) and extending towards the compartment (6, 8);
- an articulation pin (10), associable with the toilet ring or with the toilet bowl, at least partially housed in the compartment (6, 8) in a rotatable manner around a rotation axis (X) and comprising at least a second radial fin (14, 16) at least partially immersed in the dampening liquid so as to reduce the rotation speed of the pin (10), wherein the approach of the second fin (14, 16) toward the first fins (10, 12) causes a shift of the dampening liquid through a fluidic passage (18) communicating with the compartment (6, 8); and
- an intercepting assembly (20) of the dampening liquid, operatively connected to the fluidic passage (18) so as to enable the passage of the liquid when the articulation pin (10) is moved in a first angular direction, and so as to reduce the transit cross-section of the passage (18) when the articulation pin (10) is moved in a second angular direction opposite the first;
**characterized in that** the fluidic passage (18) extends axially in the articulation pin (10), and **in that** said pin (10) defines a proximal access aperture (22) and a distal access aperture (24) of the fluidic passage (18), circumferentially and axially staggered in relation to the longitudinal extension of the pin (10) so that the dampening liquid flow strikes the intercepting assembly (20).

2. Hinge according to claim 1, wherein the fluidic passage (18) extends at least partially in the articulation pin (10).

3. Hinge according to any of the previous claims, wherein the distal access aperture (24) comprises a circumferential slot which converges towards the fluidic passage (18).

4. Hinge according to any of the previous claims, wherein the intercepting assembly (20) comprises a check valve modified so that, when the articulation pin (10) is moved towards the second direction, the shutter of said valve is conformed to allow a seeping of the dampening liquid into the fluidic passage (18).

5. Hinge according to any of the previous claims, wherein the intercepting assembly (20) comprises a sphere, which is movable in a seat (26) obtained between an end wall (28) of the hinge body (2) and a proximal extremity portion (10') of the articulation pin (10).

6. Hinge according to claim 5, wherein the sphere acts on an intake (30) of the fluidic passage (18) tapered towards the free end (10") of the articulation pin (10).

7. Hinge according to claim 6, wherein a portion of the proximal access aperture (22) ends in the tapered intake (30) of the fluidic passage (18) to allow seeping of the dampening liquid.

8. Hinge according to any of the previous claims, wherein the pair of first radial fins (10, 12) and the pin (10) divide the compartment (6, 8) into a first (6) and a second (8) semi-compartment, which are preferably symmetric.

9. Hinge according to any of the previous claims, wherein the articulation pin (10) comprises a pair of second radial fins (14, 16) positioned diametrically in relation to the longitudinal extension of the pin (10).

10. Assembly comprising a toilet ring, a lid and/or a toilet bowl (40) and a hinge (1) according to any of the previous claims connected to said toilet ring, lid and/or toilet bowl (40).

11. Assembly according to claim 10, comprising a first hinge having a first articulation pin firmly connected to the toilet ring and in a swivelling manner to the lid, and a second hinge having a second articulation pin firmly connected to the lid and in a swivelling manner to the toilet ring.

## Patentansprüche

1. Dämpfungsgelenk (1), zum Anlenken einer WC-Brille/ - Deckels an eine WC-Schüssel, umfassend:
- einen Gelenkkörper (2), welcher geeignet ist, mit der WC-Schüssel (40) oder mit der Brille verbunden zu sein, umfassend eine Körperwand (4), welche wenigstens eine Kammer (6, 8) bestimmt, welche eine Dämpfungsflüssigkeit enthält, und ein Paar erster radialer Rippen (10, 12), die mit der Körperwand (4) verbunden sind und sich in Richtung der Kammer (6, 8) erstrecken;
- einen Gelenkverbindungsbolzen (10), verbindbar mit der WC-Brille oder mit der WC-Schüssel, wenigstens teilweise in der Kammer (6, 8) in einer um eine Drehachse (X) drehbaren Weise aufgenommen und wenigstens eine zweite radiale Rippe (14, 16) umfassend, welche wenigstens teilweise in der Dämpfungsflüssigkeit eingetaucht ist, um die Drehgeschwindigkeit des Bolzens (10) zu verringern, wobei die Annäherung der zweiten Rippe (14, 16) in Richtung der ersten Rippen (10, 12) eine Verschiebung der Dämpfungsflüssigkeit durch einen fluidischen Durchgang (18) bewirkt, der mit der Kammer (6, 8) kommuniziert; und
- eine Abfanganordnung (20) der Dämpfungsflüssigkeit, betrieblich mit dem fluidischen Durchgang (18) verbunden, um den Durchgang der Flüssigkeit zu ermöglichen, wenn der Gelenkverbindungsbolzen (10) in eine erste Winkelrichtung bewegt wird, und um den Durchquerungsquerschnitt des Durchgangs (18) zu verringern, wenn der Gelenkverbindungsbolzen (10) in eine zweite Winkelrichtung, entgegengesetzt zu der ersten, bewegt wird;
**dadurch gekennzeichnet, dass** sich der fluidische Durchgang (18) axial in den Gelenkverbindungsbolzen (10) erstreckt und dass der Bolzen (10) eine proximale Zugangsöffnung (22) und eine distale Zugangsöffnung (24) des fluidischen Durchgangs (18) definiert, in der Umfangsrichtung und axial in Bezug auf die Längserstreckung des Bolzens (10) versetzt, so dass der Dämpfungsflüssigkeitsstrom die Abfanganordnung (20) trifft.

2. Gelenk nach Anspruch 1, wobei sich der fluidische Durchgang (18) wenigstens teilweise in den Gelenkverbindungsbolzen (10) erstreckt.

3. Gelenk nach einem der vorhergehenden Ansprüche, wobei die distale Zugangsöffnung (24) einen umlaufenden Spalt umfasst, der in Richtung des fluidischen Durchgangs (18) konvergiert.

4. Gelenk nach einem der vorhergehenden Ansprüche, wobei die Abfanganordnung (20) ein Rückschlagventil umfasst, das derart verändert ist, so dass, wenn der Gelenkverbindungsbolzen (10) in Richtung der zweiten Richtung bewegt wird, die Klappe des Ventils so angepasst ist, um ein Eintreten der Dämpfungsflüssigkeit in den fluidischen Durchgang (18) zu ermöglichen.

5. Gelenk nach einem der vorhergehenden Ansprüche, wobei die Abfanganordnung (20) eine Kugel umfasst, die in einer Aufnahme (26) bewegbar ist, die zwischen einer Endwand (28) des Gelenkkörpers (2) und einem proximalen Endabschnitt (10') des Gelenkverbindungsbolzens (10) erhalten ist.

6. Gelenk nach Anspruch 5, wobei die Kugel auf einen Einlass (30) des fluidischen Durchgangs (18) wirkt, der in Richtung des freien Endes (10") des Gelenkverbindungsbolzens (10) verjüngt ist.

7. Gelenk nach Anspruch 6, wobei ein Abschnitt der proximalen Zugangsöffnung (22) in dem verjüngten Einlass (30) des fluidischen Durchgangs (18) endet, um ein Eintreten der Dämpfungsflüssigkeit zu ermöglichen.

8. Gelenk nach einem der vorhergehenden Ansprüche, wobei das Paar von ersten radialen Rippen (10, 12) und der Bolzen (10) die Kammer (6, 8) in eine erste (6) und eine zweite (8) Halb-Kammer teilen, die vorzugsweise symmetrisch sind.

9. Gelenk nach einem der vorhergehenden Ansprüche, wobei der Gelenkverbindungsbolzen (10) ein Paar von zweiten radialen Rippen (14, 16) umfasst, die diametral in Bezug auf die Längserstreckung des Bolzens (10) angeordnet sind.

10. Anordnung umfassend eine WC-Brille, einen Deckel oder/ und eine WC-Schüssel (40) und ein Gelenk (1) nach einem der vorhergehenden Ansprüche, welches mit der WC-Brille, dem Deckel oder/ und der WC-Schüssel (40) verbunden ist.

11. Anordnung nach Anspruch 10, umfassend ein erstes Gelenk, welches einen ersten Gelenkverbindungsbolzen aufweist, der fest mit der WC-Brille und in einer schwenkbaren Weise mit dem Deckel verbunden ist, und ein zweites Gelenk, welches einen zweiten Gelenkverbindungsbolzen aufweist, der fest mit dem Deckel und in einer schwenkbaren Weise mit der WC-Brille verbunden ist.

## Revendications

1. Charnière à amortissement (1) permettant d'articuler une lunette et/ou un abattant de toilettes à une cuvette de toilettes, comprenant :
- un corps de charnière (2) apte à être relié à la cuvette de toilettes (40) ou à la lunette, comprenant une paroi de corps (4) qui identifie au moins un compartiment (6, 8) contenant un liquide d'amortissement, et une paire de premières ailettes radiales (10, 12) qui sont reliées à la paroi de corps (4) et s'étendant vers le compartiment (6, 8) ;
- un axe d'articulation (10) pouvant être associé à la lunette de toilettes ou à la cuvette de toilettes, logeant au moins partiellement dans le compartiment (6, 8) de manière à pouvoir tourner autour d'un axe de rotation (X) et comprenant au moins une deuxième ailette radiale (14, 16) immergée au moins partiellement dans le liquide d'amortissement de manière à réduire la vitesse de rotation de l'axe (10), dans laquelle l'approche de la deuxième ailette (14, 16) vers les premières ailettes (10, 12) entraîne un déplacement du liquide d'amortissement à travers un passage fluidique (18) qui communique avec le compartiment (6, 8) ; et
- un ensemble d'interception (20) du liquide d'amortissement, relié fonctionnellement au passage fluidique (18) de manière à permettre le passage du liquide lorsque l'axe d'articulation (10) est déplacé dans une première direction angulaire, et de manière à réduire la section transversale de transit du passage (18) lorsque l'axe d'articulation (10) est déplacé dans une seconde direction angulaire opposée à la première ; **caractérisée en ce que** le passage fluidique (18) s'étend axialement dans l'axe d'articulation (10) et **en ce que** ledit axe (10) définit une ouverture d'accès proximale (22) et une ouverture d'accès distale (24) du passage fluidique (18), décalées circonférentiellement et axialement par rapport à l'extension longitudinale de l'axe (10) de sorte que le flux de liquide d'amortissement vient frapper l'ensemble d'interception (20).

2. Charnière selon la revendication 1, dans laquelle le passage fluidique (18) s'étend au moins partiellement dans l'axe d'articulation (10).

3. Charnière selon l'une quelconque des revendications précédentes, dans laquelle l'ouverture d'accès distale (24) comprend une fente circonférentielle qui converge vers le passage fluidique (18).

4. Charnière selon l'une quelconque des revendications précédentes, dans laquelle l'ensemble d'interception (20) comprend un clapet antiretour modifié de sorte que, lorsque l'axe d'articulation (10) est déplacé vers la seconde direction, l'obturateur dudit clapet est conçu pour permettre une infiltration du liquide d'amortissement dans le passage fluidique (18).

5. Charnière selon l'une quelconque des revendications précédentes, dans laquelle l'ensemble d'interception (20) comprend une sphère, qui est mobile dans un siège (26) obtenu entre une paroi d'extrémité (28) du corps de charnière (2) et une partie formant extrémité proximale (10') de l'axe d'articulation (10).

6. Charnière selon la revendication 5, dans laquelle la sphère agit sur une admission (30) du passage fluidique (18) effilée vers l'extrémité libre (10") de l'axe d'articulation (10).

7. Charnière selon la revendication 6, dans laquelle une partie de l'ouverture d'accès proximale (22) se termine dans l'admission effilée (30) du passage fluidique (18) pour permettre l'infiltration du liquide d'amortissement.

8. Charnière selon l'une quelconque des revendications précédentes, dans laquelle la paire de premières ailettes radiales (10, 12) et l'axe (10) divisent le compartiment (6, 8) en un premier (6) et un second (8) semi-compartiments, qui sont de préférence symétriques.

9. Charnière selon l'une quelconque des revendications précédentes, dans laquelle l'axe d'articulation (10) comprend une paire de secondes ailettes radiales (14, 16) placées diamétralement par rapport à l'extension longitudinale de l'axe (10).

10. Ensemble comprenant une lunette de toilettes, un abattant et/ou une cuvette de toilettes (40) et une charnière (1) selon l'une quelconque des revendications précédentes reliée à ladite lunette de toilettes, audit abattant et/ou à ladite cuvette de toilettes (40).

11. Ensemble selon la revendication 10, comprenant une première charnière ayant un premier axe d'articulation relié fermement à la lunette de toilettes et d'une manière pivotante à l'abattant, et une seconde charnière ayant un second axe d'articulation relié fermement à l'abattant et d'une manière pivotante à la lunette de toilettes.
